# EUROPEAN PATENT APPLICATION

(11) **EP 3 078 939 A1**
(43) Date of publication of application: **12.10.2016**
(21) Application number: 16171109.8
(22) Date of filing: 12.04.2013
(51) Int. Cl.: G01D 5/34, G01D 5/347

(54) **METHOD FOR CONTROLLING A STEPPER MOTOR**

(62) Divisional of application: 13718312.5
(71) Applicant: ECOLAB INC., St. Paul, MN 55102-1390 (US)
(72) Inventor: SAUER, Wolfgang, 83483 Bischofwiesen (DE); HUNKLINGER, Herbert, 83313 Siegsdorf (DE)
(74) Representative: Michalski Hüttermann & Partner Patentanwälte mbB

(57) **Abstract**

The invention relates to a method for controlling the energizing of a winding arrangement of the stator (18) of a stepper motor (12), wherein the amount of current for this energizing is adjusted depending on the angular difference between a measured rotation angle (α) of the rotor (20) and an angle of the magnetic rotating field caused by the energizing of the winding arrangement.

## Description

### Field of the Invention

The description relates to a rotation angle sensor device including (i) a rotatably mounted rotating member comprising a plurality of circumferentially disposed, equally spaced markings, wherein the rotating member is mountable for co-rotation with a shaft or any other rotating portion, (ii) a detection device for detecting the angular position of said markings, and (iii) a determination device for determining the rotation angle α from the detected angular position.

The description further relates to a stepper motor system comprising a stepper motor and a corresponding rotation angle sensor device, and to a diaphragm pump for dosing a fluid comprising a corresponding stepper motor system. The invention relates to a corresponding control method for controlling the energizing of a winding arrangement of the stator of a stepper motor.

### Background of the Invention

The above mentioned rotation angle sensor device is known from document US 2006/0054798 A1. Said document shows a rotation angle sensor device including a rotatable mounted disc comprising a plurality of circumferentially disposed, equally spaced markings, and a detection device for detecting the position of said markings. The rotating member is mountable for co-rotation with a rotating portion of a gantry of an x-ray computer tomography apparatus. The detection device comprises a light barrier. The document further describes the use in a control loop for controlling the electrical drive of the gantry of the x-ray computer tomography apparatus.

For many applications, brushless DC electric motors (BLDC motors) are used. A stepper motor (or step motor) is a special kind of brushless DC electric motor that divides a full rotation into a number of equal steps. The position of a stepper motor can then be commanded to move and hold at one of these steps without any feedback sensor. Stepper motors are very powerful and less expensive compared to an equivalent other type of brushless DC electric motor with appropriate gear box. The disadvantage is that the simple setup runs all time with full motor phase current and consumes more power than really required by the load. To overcome this disadvantage a position sensor for the rotor is needed, so the angle between rotor-and magnetic stator field can be sensed and regulated by so called Field Oriented Control (FOC), other term Vector Oriented Control (VOC) or any other appropriate control loop. This allows reducing the motor current, whiling increase efficiency and capability and determining the torque proportional to the pressure applied to the fluid. These sensors are very expensive, however.

Therefore, an aspect of the description is to provide a cost-effective rotation angle sensor device suited for the precise measurement the rotation angle of a stepper motor. Another aspect is to provide an according stepper motor system, and a diaphragm pump with this stepper motor system. The object underlying the present invention is to provide an according method for controlling the energizing of a winding arrangement of the stator of a stepper motor.

### Summary of the Invention

This object is achieved by the invention as defined by the independent claims. The dependent claims detail advantageous embodiments of the invention.

According to one aspect of the description, the detection device of the rotation angle sensor device comprises two photoelectric sensors with a circumferential distance between them, each sensor including a light source (optical transmitter) and a light sensor (optical receiver), wherein each photoelectric sensor further comprises at least one pinhole structure for limiting the cross section of the light beam illuminating the corresponding light sensor, and wherein each of pinhole structures has a non-circular cross section adapted for causing a predefined periodical sensor signal of the light sensor by turning the rotating member by one marking. The rotating member comprising the circumferentially disposed, equally spaced markings can e.g. be a disc (e.g. a slit disc) or a gear wheel.

The rotation angle sensor device is a simple sensor device suitable for the precise measurement of the rotation angle of the rotor of a synchronous machine (motor and/or generator), especially of a stepper motor.

The main advantage of the rotation angle sensor device is on the economic side and the direct interface to a control loop.

According to a preferred embodiment of the present description, the predefined periodical sensor signal of each light sensor is a sinusoidal sensor signal.

According to another preferred embodiment of the present description, the non-circular cross sections are a polygonal cross sections, especially octagonal cross sections. Studies have shown that a "clean" sinusoidal sensor signal can be generated by use of pinholes having polygonal cross sections.

In accordance with another aspect of the present description, the circumferential distance between the two photoelectric sensors is equal to (n + 0.25) times the periodic length of the markings, wherein n = 1, 2, 3, .... This ¼-distance forms a 90° phase shift of both signals, commonly named A and B. This is known as a normal encoder. Together with two sinusoidal sensor signals having this 90° phase shift, a vector signal can be generated very easily.

According to yet another preferred embodiment of the present description, the rotating member is a gear wheel with the tooth spaces between the teeth of the gear wheel being the markings. These tooth spaces are a used like the slots of a slit wheel.

In this embodiment, the rotation angle sensor device uses very inexpensive optical components and a dedicated gear wheel. The tooth spaces between the teeth of the gear wheel are combined with the above mentioned static pinhole structures and are working as a rotating pinholes. The sensor device further comprises a housing for the two pairs of light source and light sensor (optical transmitter and receiver), which is commonly in use for TV remote controls. The pair has a distance of (n + 0.25) markings/teeth.

In accordance with another aspect of the present description the number of markings and the number of periodic structures of theses markings is fifty, just like the number of rotor teeth in common stepper motors.

The present description further refers to a stepper motor system comprising (a) a stepper motor including a stator with a winding arrangement and a gear shaped rotor with a predefined number of circumferentially disposed, equally spaced rotor teeth, and (b) an above mentioned rotation angle sensor device. The rotating member of the sensor device is mounted for co-rotation with the rotor and the number of markings of the rotating member is equal to the number of rotor teeth of the gear shaped rotor. The number of markings is equal to the number of teeth of the rotor. Preferably, the number of markings is fifty like the number of rotor teeth of a rotor in common stepper motors.

According to a preferred embodiment of the present description, the stepper motor system further comprises (c) a control device for controlling the current for energizing the winding arrangement of the stator. The amount of current for this energizing is adjusted depending on the angular difference between the measured rotation angle of the rotor and an angle of the magnetic rotating field caused by the energizing of the winding arrangement. The rotation angle sensor device measures the rotation angle of the rotor.

The present description further refers to a diaphragm pump for dosing a fluid, the pump comprising the aforementioned stepper motor system, wherein the stepper motor of the system is the driving machine of the pump. The diaphragm pump comprises a pump housing with at least a first check valve and a second check valve, a fluid chamber, a diaphragm defining a wall of the fluid chamber and reciprocatingly movable, and driving means with a driving shaft for reciprocating said diaphragm. The driving means is connected to the diaphragm by an eccentric and a con rod. The stepper motor is configured to directly reciprocate the diaphragm. Preferably, the eccentric is directly attached to the driving shaft of the stepper motor.

The present invention refers to a method for controlling the energizing of a winding arrangement of the stator of a stepper motor. The amount of current for this energizing is adjusted depending on the angular difference between a measured rotation angle of the rotor and an angle of the magnetic rotating field caused by the energizing of the winding arrangement.

According to a preferred embodiment of the present invention, the amount of current for the energizing is reduced to a minimum value, which is necessary to make the rotation angle of the rotor following up the angle of the magnetic rotating field.

According to another preferred embodiment of the present invention, the rotation angle of the rotor is determined by the sensor signal generated by the light sensors of the rotation angle sensor device.

According to yet another preferred embodiment of the present invention, the load of the stepper motor is estimated from the minimum value of the amount of current for the energizing of the winding arrangement.

### Detailed Description of the Invention

Additional details, features, characteristics and advantages of the object of the invention are disclosed in the figures and the following description of the respective figures, which - in exemplary fashion - show one embodiment and an example of the invention. In the drawings:
Fig. 1 shows a schematic illustration of a stepper motor system with a stepper motor and a rotation angle sensor device with two photoelectric sensors according to a preferred embodiment of the present description;
Fig. 2 shows a sectional drawing of a housing for the rotation angle sensor device;
Fig. 3 depicts another drawing of the housing shown in Fig. 2;
Fig. 4 shows a cross section of the pin hole structures of the photoelectric sensors; and
Fig. 5 shows the resulting sinusoidal sensor signal in direct comparison with a pure sine signal.

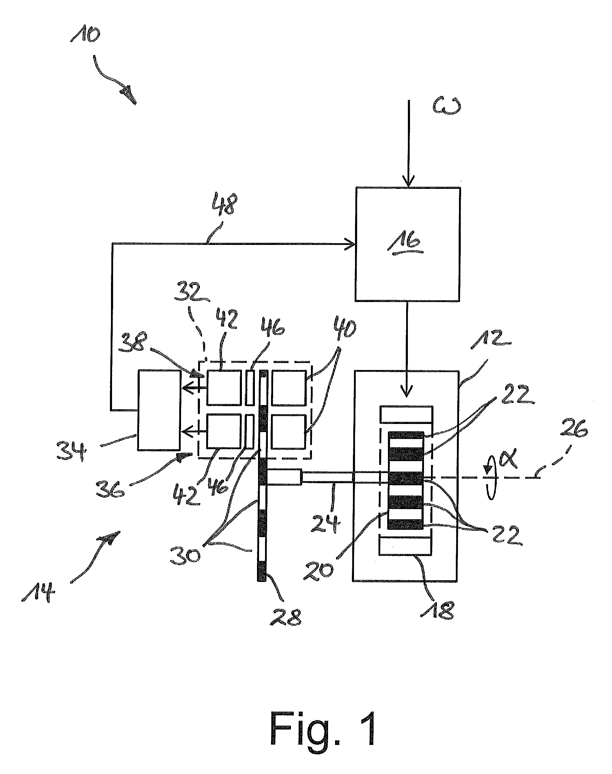

The illustration in Fig. 1 shows a stepper motor system 10 with a stepper motor 12, a rotation angle sensor device 14 and a control device 16 for controlling the current of the stepper motor 12. These three components 12, 14, 16 build a (feedback) control loop. The stepper motor 12 includes a stator 18 with a winding arrangement (not shown) and a gear shaped rotor 20 with a predefined number of circumferentially disposed, equally spaced rotor teeth 22. The rotor 20 is rotationally fixed to a shaft 24 of the stepper motor 12, wherein the rotor 20 and the shaft 24 can pivot about a rotational axis 26.

The rotation angle sensor device 14 comprises a rotating member 28 with a plurality of circumferentially disposed, equally spaced markings 30, a detection device 32 for detecting the angular position of said markings 30 and a determination device 34 for determining the rotation angle α from the detected angular position of the markings 30. The rotating member 28 is a disc mounted for co-rotation with the shaft 24 of the stepper motor 12. The detection device 32 comprises two photoelectric sensors 36, 38 with a circumferential distance (with reference to the rotating member 28) between them, wherein each photoelectric sensor 36, 38 includes a light source (an optical transmitter) 40 and a light sensor (an optical receiver) 42.

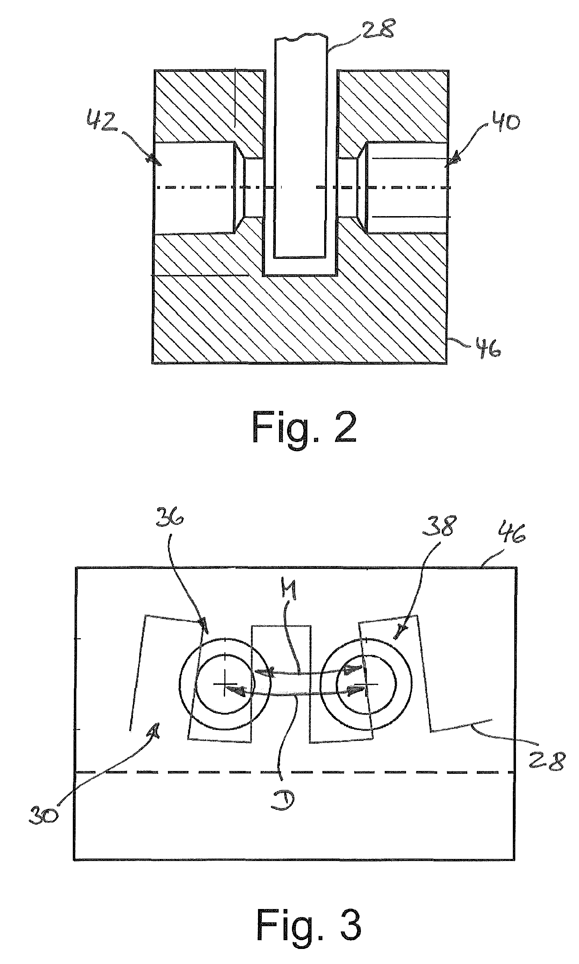

The light source 40 and the light sensor 42 of each photoelectric sensor 36, 38 are mounted in a sensor housing 44 shown in Figs 2 and 3. The housing 44 provides a slit for rotating the rotating member 28 between the light sources 40 and the light sensors 42.

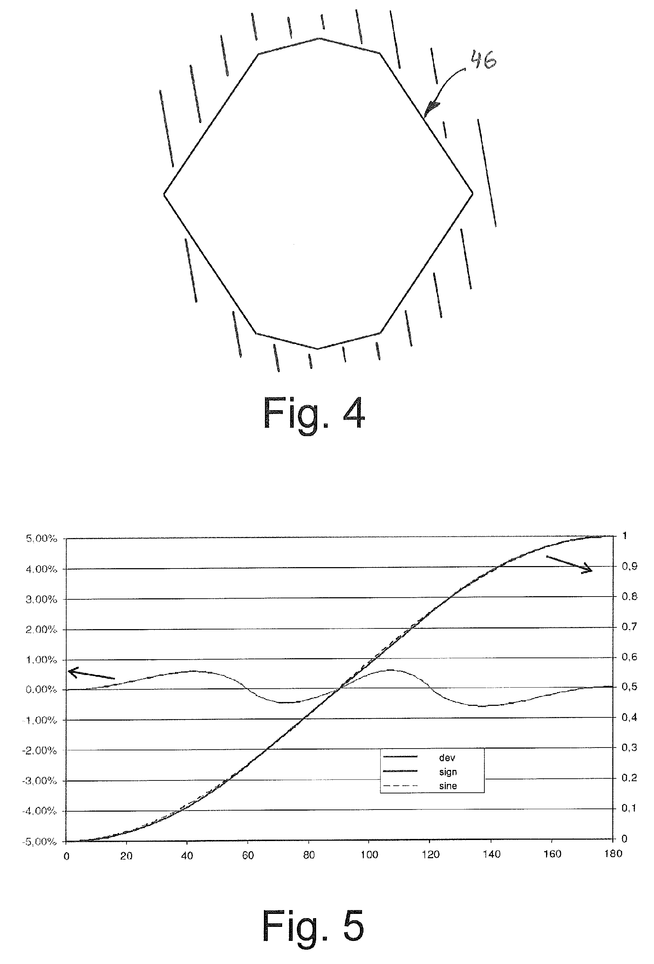

Each photoelectric sensor 36, 38 further comprises at least one pinhole structure 44 for limiting the cross section of the light beam of the light source 40 illuminating the corresponding light sensor 42. Each of the pinhole structures 46 has a non-circular cross section (as shown in Fig. 4) adapted to cause a predefined periodical sensor signal of the light sensor 42 by turning the rotating member by one marking. This sensor signal is transmitted to the determination device 34 via signaling lines. The determination device 34 determines the rotation angle α from the detected angular position of the markings and sends a corresponding signal to the control device 16 via another signaling line (arrow 48).

The predefined periodical sensor signal of each light sensor 42 is a sinusoidal sensor signal with a phase difference of 90° because the circumferential distance D between the two photoelectric sensors 36, 38 is equal to (n + 0.25) times of the periodic length M of the markings, wherein n = 1 in the embodiment shown in Fig. 3. The rotating member 28 of the rotation angle sensor device 14 shown in Fig. 3 is a gear wheel with the tooth spaces between the teeth of the gear wheel being the markings 30.

The control device 16 controls the current for energizing the winding arrangement of the stator 18. The input variable (or at least one of the input variables) of the control device 16 is the desired rotation speed ω. The amount of current for this energizing is adjusted depending on the angular difference between the measured rotation angle α of the rotor 20 and an angle of the magnetic rotating field caused by the energizing of the winding arrangement. The rotation angle of the rotor 20 is measured by the rotation angle sensor device 14. According to one aspect of the invention, the minimum value of the amount of current for energizing the winding arrangement, which is necessary to make the rotation angle of the rotor 20 following up the angle of the magnetic rotating field, is determined. Afterwards, the load of the stepper motor 12 is estimated from said minimum value of the amount of current for the energizing of the winding arrangement.

Fig. 4 shows the non-circular cross section of the pinhole structures 44 in detail. The cross section of both pinhole structures 44 are polygonal cross sections.

Fig. 5 shows the resulting sinusoidal sensor signal (thick line) in direct comparison with a shifted pure (shifted) sine signal (dotted line) and the corresponding deviation (fine line) in percentage % (left side) over an angle range 0° to 180° of one gap (360°/x of one complete turn). With the number of markings being x = 50, the periodic structures of the markings 30 is 7.2° of one complete turn of the rotating member 28.

The rotation angle sensor device 14 comprises a rotating member 28 formed as a gear wheel with fifty (x = 50) markings 30 and two photoelectric sensors (36, 38) including pinhole structures 44, each with the octagonal cross section shown in Fig. 4.

By geometrical analysis, the systematic error of the sensor device was calculated.

By the change of the shape of the pinhole 46 of the sensors 42, this systematic error can be minimized and therefore the accuracy of the sensor device 14 enlarged.

Conversely, a circular shape shows an easily observable distortion (not shown), yet yielding excellent results equivalent to 5100 pulses per rotation.

The calculated systematic error is about +-5% of the full scale amplitude. This error can be minimized a bit by the usage of a narrow beam LED, which is subject to statistic error.

It should be noted that, as used in this specification and the appended claims, the singular forms "a", "an" and "the" include plural referents unless the content clearly dictates otherwise. Thus, for example, reference to a composition containing "a compound" includes a mixture of two or more compounds. It should also be noted that the term "or" is generally employed in its sense including "and/or" unless the content clearly dictates otherwise.

## Claims

1. A method for controlling the energizing of a winding arrangement of the stator (18) of a stepper motor (12), wherein the amount of current for this energizing is adjusted depending on the angular difference between a measured rotation angle (α) of the rotor (20) and an angle of the magnetic rotating field caused by the energizing of the winding arrangement.

2. The method according to claim 1, wherein the amount of current for the energizing is reduced up to a minimum value, which is necessary to make the rotation angle (α) of the rotor (20) following up the angle of the magnetic rotating field.

3. The method according to claim 1 or 2, wherein the rotation angle (α) of the rotor (20) is determined by the sensor signal generated by the light sensors (42) of a rotation angle sensor device (14) including:
- a rotatably mounted rotating member (28) comprising a plurality of circumferentially disposed, equally spaced markings (30), wherein the rotating member (28) is mountable for co-rotation with a shaft (24) or any other rotating portion,
- a detection device (32) for detecting the angular position of said markings (30), and
- a determination device (34) for determining the rotation angle (α) from the detected angular position,
**characterized in that** the detection device (32) comprises two photoelectric sensors (36, 38) with a circumferential distance (D) between them, each sensor (36, 38) including a light source (40) and a light sensor (42), wherein
- each photoelectric sensor (36, 38) further comprises at least one pinhole structure (46) for limiting the cross section of the light beam illuminating the corresponding light sensor (42), and wherein
- each of the pinhole structures (46) has a non-circular cross section adapted for causing a predefined periodical sensor signal of the light sensor (40) by turning the rotating member (28) by one marking (30).

4. The method according to one of claims 1 to 3, wherein the load of the stepper motor (12) is estimated from the minimum value of the amount of current for the energizing of the winding arrangement.
